(19) Europäisches Patentamt
European Patent Office
Office européen des brevets

(11) **EP 2 138 372 B1**

(12) **EUROPEAN PATENT SPECIFICATION**

(45) Date of publication and mention
of the grant of the patent:
**08.08.2012 Bulletin 2012/32**

(51) Int Cl.:
***B60W 40/06*** (2012.01)    ***B60T 8/172*** (2006.01)
***G01N 19/02*** (2006.01)

(21) Application number: **08159122.4**

(22) Date of filing: **26.06.2008**

(54) **Vehicle-to-road contact estimation**

Schätzung des Fahrzeug-Straße-Kontaktes

Évaluation de contact d'un véhicule sur une route

(84) Designated Contracting States:
**DE GB SE**

(43) Date of publication of application:
**30.12.2009 Bulletin 2009/53**

(73) Proprietors:
• **Volvo Car Corporation**
**405 31 Göteborg (SE)**
• **Haldex Brake Products Aktiebolag**
**261 24 Landskrona (SE)**

(72) Inventors:
• **Bruzelius, Fredrik**
**41323 Göteborg (SE)**
• **Solyom, Stefan**
**42470 Olofstorp (SE)**
• **Svendenius, Jacob**
**22240 Lund (SE)**
• **Hulten, Johan**
**41316 Göteborg (SE)**
• **Gäfvert, Magnus**
**22353 Lund (SE)**

(74) Representative: **VALEA AB**
**Lindholmspiren 5**
**417 56 Göteborg (SE)**

(56) References cited:
**EP-A- 1 857 301     DE-A1-102005 060 219**
**US-A- 6 015 192     US-A1- 2001 029 419**
**US-B1- 6 549 842**

**Description**

TECHNICAL FIELD

The present invention relates to a method for determining at least a first parameter relating to a wheel-to-road contact wherein the wheel has a longitudinal and a lateral extension. The method comprises a step of determining a plurality of wheel parameters relating to the load on the wheel and/or relating to the motion of the wheel.

Furthermore, the present invention relates to a computer program product adapted to carry out the method of the present invention; an electronic control unit comprising such a computer program product, and a vehicle comprising such an electronic control unit.

BACKGROUND OF THE INVENTION

For a vehicle furnished with a plurality of wheels, the values of parameters relating to the wheel-to-road contact for at least one of the wheels is often of great interest for the driver and/or a driver assistance system of the vehicle. Such a system may for instance be: an anti-skid system (ABS); a traction control system (ASR), or an electronic stability program (ESP).

One parameter relating to the wheel-to-road contact, which parameter is often an important parameter for any one of the systems hereinabove, is the so called slip. In a longitudinal wheel load case, i.e. when a wheel is subjected to loads generally extending in a direction perpendicular to the axis of the rotation of the wheel, the slip is defined in terms of the difference of the longitudinal velocity and the rotational speed of the wheel normalized by the rotational speed of the wheel. In a lateral wheel load case, i.e. when a wheel is subjected to loads extending in a direction parallel to the axis of rotation, the slip is generally defined in terms of a ratio between the wheel's lateral velocity and the aforesaid rotational speed.

Another parameter which generally is of interest is the wheel-to-road friction. For instance, a value of the wheel-to-road friction may be communicated to the driver of the vehicle so that he or she can adjust his or her driving according to the present wheel-to-road friction. Moreover, the wheel-to-road friction may be used, preferably together with the slip as defined hereinabove, in any one of the previously mentioned driver assistance systems.

As such, it is desirable to obtain data as regards the friction and/or the slip whilst driving. However, the friction is generally difficult to measure or sense directly during driving; hence it needs to be determined by using e.g. indirect friction determination methods.

To this end, the prior art for instance proposes the use of recursive estimation algorithms which are primarily based on the assumption that tire forces may be expressed by a nonlinear function which is dependent on the slip as well as a plurality of parameters which describe the actual condition of the tire and the road surface.

For example, US 5 513 907 proposes that a method be used, in which method the wheel speed, the rotational acceleration of the vehicle wheel and a braking pressure is determined. The wheel slip is then calculated from the parameters above and the friction is determined by means of linear recursive estimation algorithms.

However, the method as proposed in '907 generally requires that the friction be approximated by an equation which includes the wheel slip, which approximation may in itself impair the result of the estimated friction. Furthermore, the linear recursive method used in '907 may be time consuming to execute and may thus require a long computing time and/or advanced computer processing units.

US 2001/0029419 A1 discloses a road surface friction coefficient estimating apparatus for estimating a road surface friction coefficient of a vehicle that is traveling at a steady state. The road surface friction coefficient estimating apparatus basically has a driving/braking force controller, a driving force controller, a braking force controller (brake fluid pressure controller), a plurality of wheel velocity sensors, a wheel load sensor and a control unit.

As such, and as may be realized from the above, there is a need for an improved method for determining at least a first parameter relating to a wheel-to-road contact, which parameter is the friction, wherein the method requires less time to be executed and/or provides a more accurate result as regards the determined value of the first parameter.

SUMMARY OF THE INVENTION

A first object of the present invention is to provide a first parameter determination method, which method provides a measure of the first parameter in an appropriately short time and/or by requiring an appropriately low capacity as regards a computer processing unit.

A second object of the present invention is to provide a first parameter determination method, which method utilizes a robust method for obtaining the first parameter.

A third object of the present invention is to provide a first parameter determination method, which method may be used for several wheel loads cases, e.g. longitudinal and/or lateral wheel load cases.

A fourth object of the present invention is to provide a first parameter determination method, which method does not require the introduction of a simplified approximation of the first parameter in terms of other parameters relating to the wheel and/or wheel-to-road contact.

At least one of the aforementioned objects is achieved by a method for determining at least a first parameter relating to a wheel-to-road contact as set out in appended claim 1.

Thus, the invention relates to a method for determining at least a first parameter relating to a wheel-to-road contact, wherein the wheel has a longitudinal and a lateral extension and wherein the method comprises a step of determining a plurality of wheel parameters relating to the load on the wheel and/or relating to the motion of the wheel.

According to the present invention, the method further comprises the steps of:

- establishing a fictive relation comprising: at least one of the plurality of wheel parameters, the first parameter and a set of second parameters relating to the wheel-to-road contact, wherein the relation, at least during a longitudinal wheel load case or a lateral wheel load case, is linearly proportional to each one of the parameters in the set of second parameters or an inversion thereof;
- establishing a quality measure indicative of how well the fictive relation is fulfilled;
- selecting a set of individual values of the first parameter;
- for at least two of the individual values in the set:

  ○ determining the value each one of the parameters in the set of second parameters which results in a preferred quality measure for the individual value of the first parameter;

- selecting the value of the first parameter as the individual value from the at least two individual values which corresponding preferred quality measure is indicative of that the fictive relation is best fulfilled.

Thus, by utilizing the aforementioned method of the invention, an appropriate value of the first parameter may be determined by a robust method which will always provide a result as regards the first parameter. Furthermore, since the method of the invention proposes that the fictive relation is proportional to each one of a set of second parameters relating to the wheel-to-road contact, this means that the method may be rapidly executed, since finding appropriate values of each one of the set of second parameters as regards the fictive relation may be performed by for instance using well-known and rapid linear optimization techniques.

Moreover, the method of the present invention may preferably be used in a lateral wheel load case, a longitudinal wheel load case or a combination thereof. As such, the method of the present invention provides for that basically only one type of parameter determination method needs to be implemented in e.g. a electronic control unit of a vehicle.

As used herein the expression "road" relates to any type of base on which the wheels of a vehicle may be supported whilst driving. Consequently, the expression "road" as used in the present application is not limited to roads made by man.

In a preferred embodiment of the present invention, the quality measure is an error function for the fictive relation such that a value of zero of the quality measure is indicative of that the fictive relation is fulfilled.

By arranging the quality measure as an error function, a step of finding parameters providing an appropriate value of the quality measure may be regarded as an optimization step. As such, well-known and tested optimization techniques may be used in the method of the present invention, which ensures that the parameter determination method may be easily and efficiently implemented.

In another embodiment of the present invention, the step of determining the value of each one of the parameters in the set of second parameters comprises a step of minimizing the quality measure.

In a further embodiment of the present invention, the step of minimizing the quality measure is performed by utilizing a linear optimization technique.

As previously mentioned, linear optimization techniques are well-known from the prior art for being rapid and robust.

In another embodiment of the present invention, the step of determining the value of each one of the parameters in the set of second parameters comprises the steps of:

- selecting a second set of individual values of the second parameter;
- for at least two of the individual values in the second set:

  ○ selecting the value of the second parameter as the individual value which results in the preferred quality measure.

In another embodiment of the present invention, the method is performed for a wheel load case comprising a lateral load, wherein the wheel parameters comprise a subset which in turn comprises: an aligning torque, a vertical force and the lateral force of the wheel,
wherein the fictive relation comprises the subset.

In a further embodiment of the present invention, the fictive relation further comprises the following parameters: the wheel-to-road friction, a length parameter relating to an effective length of a contact patch between the wheel and the road and a caster offset of the wheel,
wherein the length parameter is comprised in the set of second parameters.

In another embodiment of the present invention, the wheel is mounted on a vehicle and the lateral force is determined by a lateral force relation comprising the following parameters: a vehicle mass, a vehicle longitudinal acceleration, a vehicle lateral acceleration and a vehicle yaw acceleration.

In a further embodiment of the present invention, the load case also comprises a longitudinal load and the fictive relation further comprises a wheel parameter representing the longitudinal load.

In another embodiment of the present invention, the method is performed for a vehicle comprising a first and a second wheel during a load case comprising a longitudinal load,
wherein the first wheel has a first longitudinal velocity and the second wheel has a second longitudinal velocity. The method comprises a step of establishing a relation between the first and second longitudinal velocities, wherein the fictive relation comprises the following parameters: a longitudinal load of the first wheel and a longitudinal load of the second wheel.

In a further embodiment of the present invention, the fictive relation further comprises the following parameters: a first longitudinal tire stiffness of the first wheel, a second longitudinal tire stiffness of the second wheel and the wheel-to-road friction, which wheel-to-road friction is assumed to be equal for the first and second wheels, wherein the first and second longitudinal tire stiffnesses are comprised in the set of second parameters.

In another embodiment of the present invention, the load case also comprises a lateral load and the fictive relation further comprises: a wheel parameter representing the lateral load, a first combined tire stiffness of the first wheel and a second combined tire stiffness of the second wheel, wherein the first and second combined tire stiffnesses are comprised in the set of second parameters.

In a further embodiment of the present invention, the fictive relation further comprises the following parameters: an effective rolling radius of the first wheel, an effective rolling radius of the second wheel, a rotational velocity of the first wheel and a rotational velocity of the second wheel.

In another embodiment of the present invention, the wheel is mounted on a vehicle and the longitudinal force is determined by a longitudinal force relation comprising the following parameters: a vehicle mass, a vehicle longitudinal acceleration and a parameter representative of a driving or breaking force between the wheels of the vehicle.

As second aspect of the present invention relates to a computer program product comprising a computer program containing computer program code executable in a computer or a processor to implement all the steps of a first parameter determination method of the present invention. The product is stored on a computer-readable medium or a carrier wave.

A third aspect of the present invention relates to an electronic control unit comprising a computer program product according to the second aspect of the present invention and which electronic control unit is arranged to execute a first parameter determination method according to the first aspect of the present invention.

A fourth aspect of the present invention relates to a vehicle comprising an electronic control unit according to the third aspect of the present invention.

BRIEF DESCRIPTION OF THE DRAWINGS

The present invention will hereinafter be further explained by means of non-limiting examples with reference to the appended figures wherein;

Fig. 1    is schematic plan view of a vehicle furnished with four wheels;
Fig. 2    is schematic cross section side view of a tire contacting a road;
Fig. 3    is a graph illustrating a minimization procedure according to a preferred implementation of a parameter determination step of the present invention, and
Fig. 4    is a graph illustrating a minimization procedure according to another preferred implementation of a parameter determination step of the present invention.

DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

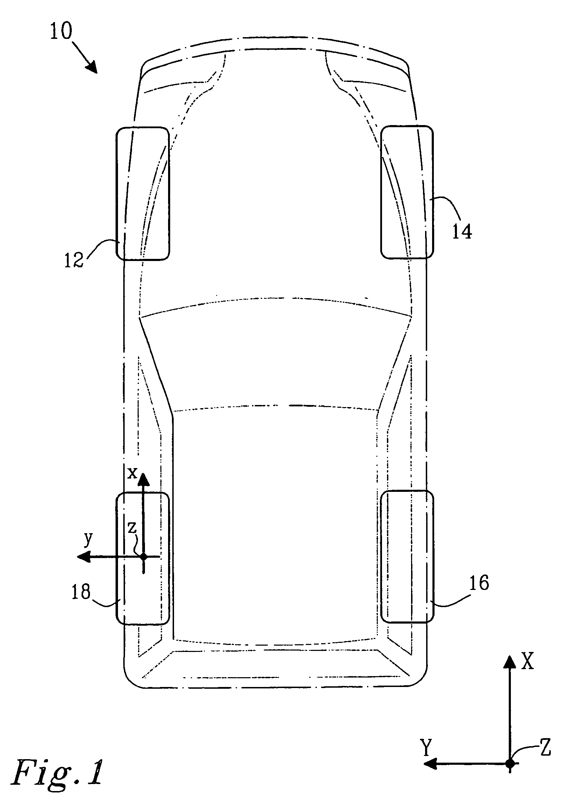

Fig. 1 schematically illustrates a vehicle 10, such as a car, provided with a plurality of wheels 12, 14, 16, 18. As may be gleaned from Fig. 1, the vehicle 10 extends in a global longitudinal direction X which is substantially parallel to the normal direction of travel of the vehicle 10. Furthermore, the vehicle 10 extends in a global vertical direction Z which is substantially normal to a road on which the vehicle 10 is located. Moreover, the vehicle 10 extends in a global lateral direction Y which is substantially perpendicular to the global longitudinal direction X as well as the global vertical direction Z.

Each one of the wheels 12, 14, 16, 18 extends in: a longitudinal direction x, a lateral direction y and a vertical direction z. When the vehicle 10 is driving straight ahead, the local direction x of each wheel is substantially parallel to the global longitudinal direction X of the vehicle 10. Furthermore, each one of the wheels 12, 14, 16, 18 is furnished with a tire (not shown in Fig. 1) providing a contact area between the wheel and a road on which the vehicle 10 is travelling. As may be appreciated by a person skilled in the art, depending on *inter alia* the characteristics of the tire as well as the road, wheel-to-road contact parameters, such as the friction coefficient μ between the tire and the road, may vary and the present invention provides a method for estimating such contact parameters. It should be noted that although the embodiments hereinbelow relate to methods of determining the aforesaid friction coefficient μ, the method of the present invention may also be appropriate to use when determining other parameters relating to the wheel-to-road contact, such as the slip σ.

In particular, the present invention provides a method for estimating the friction coefficient for a longitudinal case, e.g. when a wheel is subjected to loads extending substantially in its longitudinal direction x, as well as for a lateral case, wherein a wheel is subjected to loads which are substantially parallel to the lateral direction y. However, as may be realized from the description hereinbelow, the methods for the two aforementioned cases may be generalized so as to yield cases with oblique loading, i.e. cases wherein a wheel is subjected to longitudinal as well as lateral loads.

It should be noted that in the description hereinbelow, references are often made to wheel loads and moments in various directions. As such: a longitudinal wheel load $F_x$ relates to a load extending substantially parallel to the longitudinal direction x; a lateral wheel load $F_y$ relates to a load extending substantially parallel to the lateral direction y, and a vertical wheel load $F_z$ relates to a load extending substantially parallel to the vertical direction z. Moreover, reference is made to a moment $M_z$ around an axis extending parallel to the vertical direction z. This moment $M_z$ is also referred to as an aligning moment.

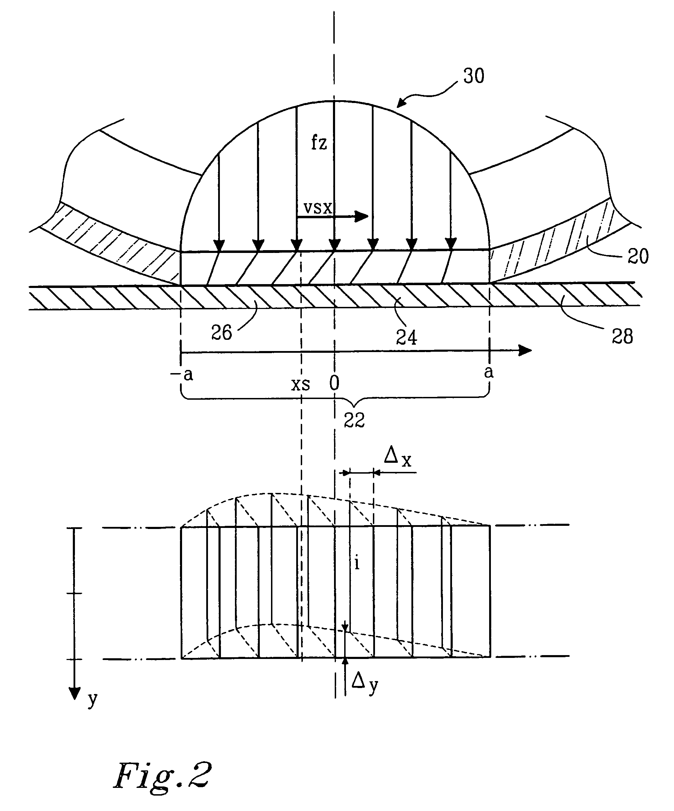

In order to estimate the aforesaid friction coefficient between a tire and the road, a model of the tire - and in particular a model of the contact area between the tire and the road - is preferred. Fig. 2 schematically illustrates one preferred tire model to be used in the method of the present invention, namely the so called brush model. The brush model is obtained by dividing the volume of a tire 20 in the contact region - or contact patch 22 - into small brush elements, or bristles, see Fig. 2. Each bristle is assumed to deform independently in the longitudinal and lateral directions. Useful in the model is the separation of the contact patch 22 into one adhesive 24 and one sliding 26 region. In the adhesive region 24, the bristles adhere to a road surface 28 and the deformation force is carried by static friction. In the sliding region 26, the bristles slide across the road surface 28 under influence of sliding friction.

Assuming a parabolic pressure distribution between the tire 20 and the road 28 -which load distribution is denoted by 30 in Fig. 2 - a mathematical formulation of a normalized longitudinal or lateral tire force $f_i = F_i / F_z$ (wherein i=x or i=y) becomes

$$\Psi(\sigma_i, C_{oi}, \mu) = \begin{cases} -C_{oi}\sigma_i + \dfrac{1}{3} \cdot \dfrac{C_{oi}^2 \sigma_i |\sigma_i|}{\mu} - \dfrac{1}{27} \cdot \dfrac{(C_{oi}\sigma_i)^3}{\mu^2} & |\sigma_i| < \sigma_i^0 \\ -\mu sign(\sigma_i) & otherwise \end{cases} . \qquad \text{Eq. 1}$$

wherein: $\Psi(\sigma_i, C_{0i}, \mu)$ denotes the normalized tire force; $\sigma_x^0 = 3\mu / C_{0x}$; $\sigma_y^0 = 3\mu / C_{0y}$, and $C_{0x}$, $C_{0y}$ denotes the normalized tire stiffness and μ is the friction coefficient. The slip is defined as $\sigma_x = (v_x - R_e\omega)/(R_e\omega))$ and $\sigma_y = v_y / v_x$ wherein $v_x$ is the longitudinal velocity and $v_y$ is the lateral velocity of the wheel. The rolling radius of a wheel is denoted $R_e$ and ω is the rotational velocity of the wheel.

Eq. 1 hereinabove may be rearranged such that the slip $\sigma_i$ may be expressed in terms of the other parameters, namely

$$\sigma_i = -\frac{3\mu}{C_{0i}}\left(1-(1-\frac{|F_i|}{F_z})^{\frac{1}{3}}\right)sign(F_i).$$

Eq. 2

The expression according to Eq. 2 is a preferred expression for the slip of the wheel which expression is useful when estimating the friction between the tire and the road. As such, the expression according to Eq. 2 is preferred when establishing methods for determining at least a first parameter - such as the friction - relating to a wheel-to-road contact. Thus, what the present invention proposes is a first parameter determination method comprising the following steps:

- determining a plurality of wheel parameters relating to the load on the wheel and/or relating to the motion of the wheel,
- establishing a fictive relation E comprising: at least one of the plurality of wheel parameters, the first parameter and a set of second parameters relating to the wheel-to-road contact, wherein the relation, at least during a longitudinal wheel load case or a lateral wheel load case, is linearly proportional to each one of the parameters in the set of second parameters or an inversion thereof;
- establishing a quality measure QM indicative of how well the fictive relation E is fulfilled;
- selecting a set of individual values of the first parameter;
- for at least two of the individual values in the set:

  ○ determining the value for each one of the parameters in the set of second parameters which results in a preferred quality measure for the individual value of the first parameter;

- selecting the value of the first parameter as the individual value from the at least two individual values which corresponding preferred quality measure is indicative of that the fictive relation E is best fulfilled.

As may be realized by a person skilled in the art, depending on the load case studied when determining the first parameter, i.e. whether a longitudinal case; a lateral case or a combination thereof is studied, the fictive relation E may have to be adjusted to that specific load case. As such, depending on the actual load case, the fictive relation E may be adjusted so as to model a specific physical condition, e.g. an equilibrium in forces or moments in a specific direction. Naturally, depending on the actual physical condition modelled by the fictive relation E, the parameters governing that specific condition may also have to be adjusted, resulting in that fictive relations E for different load cases may include different sets of input parameters. This will be explained more thoroughly hereinbelow for different load cases: a lateral case, a longitudinal case and a combinations thereof, starting with a lateral case.

In a pure lateral load case, i.e. when the wheel is subjected to a pure lateral tire force, i.e. a force being substantially parallel to the lateral direction y of the wheel, the aligning torque $M_z$ of the wheel may be formulated according to the following:

$$M_z = \begin{cases} -\dfrac{C_{0y}\sigma_y a}{3}(1-\psi)^2\left(4\psi-1-\dfrac{3\delta_c}{a}\right)-3sign(F_y)\mu F_z a\psi^2\left((1-\psi)^2-\dfrac{2\delta_c\psi}{3a}+\dfrac{\delta_c}{a}\right) & NS \\ -\mu\delta_c F_z sign(F_y) & S \end{cases}$$

Eq. 3

wherein:   $\psi = \sqrt{\left(\dfrac{\sigma_x}{\sigma_x^o}\right)^2+\left(\dfrac{\sigma_y}{\sigma_y^o}\right)^2}$ ,and $\delta_c$ denotes the caster offset of the wheel. The caster offset of a wheel is defined as the distance on the road between where the vertical post, e.g. a strut of a wheel suspension, would touch the road and the point where the wheel touches the road. Furthermore, the parameter $a$ in Eq. 3 stipulates half the tire effective length in the longitudinal direction x of the contact patch.

As may be gleaned from Eq. 3, the equation governing the aligning torque $M_z$ is dependent on the actual contact condition between the wheel and the road, wherein the condition denoted *NS* is indicative of that the contact is non-saturated and the condition denoted S is indicative of that the contact is saturated, i.e. that there is no adhesion in the contact patch.

Now, assuming that the longitudinal force $F_x$ as well as the slip $\sigma_x$ are zero and combining Eq. 2 and Eq. 3, the following expression may be obtained:

$$M_z = -\mu sign(F_y)F_z a\left(\left(1-\left(1-\frac{|F_y|}{F_z\mu}\right)^{\frac{1}{3}}\right)\left(1-\frac{|F_y|}{F_z\mu}\right)+\frac{\delta_c}{a}\frac{|F_y|}{F_z\mu}\right).$$

Eq. 4

The relation as defined in Eq. 4 may constitute the fictive relation E as laid out in the description of the general parameter determination method of the present invention. As such, from Eq. 4 it is realized that the wheel parameters included in the fictive relation E - and which parameters thus need to be determined in the determination method of the present invention - are: the aligning moment $M_z$, the lateral force $F_y$, the vertical force $F_z$ and the caster offset of the wheel $\delta_c$. As may further be realized from Eq. 4, the relation defined therein comprises two unknown parameters, the first one being the tire-to-road friction $\mu$ and the other being the half the tire effective length a. As such, again referring to the parameter determination method of the present invention, the tire-to-road friction $\mu$ may be regarded as the first parameter whereas half the tire effective length a may be regarded as the second parameter.

As may be gleaned from Eq. 4, the fictive relation E in the later case comprises the expression $\frac{F_y}{F_z}$ which may be reformulated to a normalized lateral force of the wheel such that:

$$f_y = \frac{F_y}{F_z}$$

Eq. 5

This normalized lateral force $f_y$ may be estimated by a simple load dynamic load transfer model - or a lateral force relation $RF_y$ - and a computation of the lateral force acting on the wheels of the vehicle from the vehicle longitudinal and lateral accelerations $a_x$, $a_y$ as well as the vehicle yaw acceleration $\ddot{\psi}$ such that:

$$f_y = \frac{ma_y + \delta\ddot{\psi}}{mg(\alpha + \beta a_x + \gamma a_y)}$$

Eq. 6

wherein the coefficients $\alpha, \beta, \gamma$ and $\delta$ correspond to the mass distribution of the vehicle 10 whereas the coefficient m represent the mass of the vehicle 10 and g corresponds to the acceleration of gravity.

Thus, the method of determining the first parameter - which in this case is the tire-to-road friction $\mu$ - may for the lateral case be regarded as comprising a step of finding the parameter pair ($\mu$,a) fulfilling the fictive relation E as presented in Eq. 4. As such, with reference to the determination method of the present invention as previously been presented, the set of second parameters in this case includes only one parameter, namely half the tire effective length a. Thus, in the presentation of the determination method for a lateral wheel load case presented hereinbelow, the parameter a relating to half the tire effective length will be referred to as a second parameter.

In order to obtain the aforesaid parameter pair ($\mu$,a) fulfilling the fictive relation E, the present invention proposes a step of establishing a quality measure QM, which quality measure QM is indicative of how well the fictive relation E is fulfilled. The problem of finding the parameter pair ($\mu$,a) fulfilling the fictive relation E may now be reformulated as how to find an appropriate parameter pair ($\mu$,a) which results in a preferred value of the quality measure QM.

Examples of such quality measures QM may for instance be:

$$QM = \left(M_z + \mu sign(F_y)F_z a\left(\left(1-\left(1-\frac{|F_y|}{F_z\mu}\right)^{\frac{1}{3}}\right)\left(1-\frac{|F_y|}{F_z\mu}\right)+\frac{\delta_c}{a}\frac{|F_y|}{F_z\mu}\right)\right)^2 , \text{ or}$$

Eq. 7

$$QM = \left| M_z + \mu sign(F_y)F_z a\left(\left(1 - \left(1 - \frac{|F_y|}{F_z\mu}\right)^{\frac{1}{3}}\right)\left(1 - \frac{|F_y|}{F_z\mu}\right) + \frac{\delta_c}{a}\frac{|F_y|}{F_z\mu}\right)\right|.$$  Eq. 8

As may be realized by a person skilled in the art, if a quality measure QM is formulated according to either one of Eq. 7 or Eq. 8 hereinabove, the problem of finding a parameter pair $(\mu, a)$ resulting in a preferred value of the quality measure QM may be regarded as an optimization problem or, even more specifically, a minimization problem, viz

$$\min_{\mu, a} QM.$$  Eq. 9

As may be gleaned when studying Eq. 4 to Eq. 9 hereinabove, the fictive relation E as well as the quality measure QM may be regarded as relating to an instantaneous wheel load condition. However, although it may be possible to determine an instantaneous value of each one of the parameters in the pair $(\mu, a)$, in practice, two or more measurement samples are generally desired in order to obtain a filtered (e.g. average) value of the parameter pair $(\mu, a)$ during a certain time period. This reasoning as regards two or more measurement samples applies to all the embodiments of the present invention presented hereinbelow.

The minimization problem as presented in Eq. 9 may be solved in a plurality of ways in order to obtain the preferred parameter pair $(\mu, a)$. However, the determination method of the present invention proposes two preferred implementations of a method of solving the above minimization problem, which implementations are presented hereinbelow.

Each one of the two implementations is based on an insight made by the inventors of the present invention, namely that the fictive relation E in the lateral case, i.e. the relation E relating to the aligning moment $M_z$ as stipulated in Eq. 4, is not linearly proportional to the first parameter, i.e. the tire-to-road friction $\mu$. As such, in order to overcome the nonlinearity problem as regards the first parameter $\mu$, each one of the implementations comprises a step of selecting a set of individual values $\{\mu_i\}_{i=1,n}$ of the first parameter $\mu$. Furthermore, each one of the first and second implementations comprises a step of, for each one of the individual values $\{\mu_i\}_{i=1,n}$ of the first parameter $\mu$, identifying the corresponding value of the second parameter a which results in a minimum, or at least a value below a preferred threshold, of the quality measure QM.

To this end, the first implementation proposes a step of selecting a second set of individual values $\left\{a_j^i\right\}_{j=1,n}$ of the second parameter a for each one of the individual values $\{\mu_i\}_{i=1,n}$ of the first parameter $\mu$. Moreover, the first implementation proposes that, for each one of the individual values $\{\mu_i\}_{i=1,n}$ of the first parameter $\mu$, the value of the quality measure QM is determined for at least two of the corresponding values $\left\{a_j^i\right\}_{j=1,n}$ of the second parameter a.

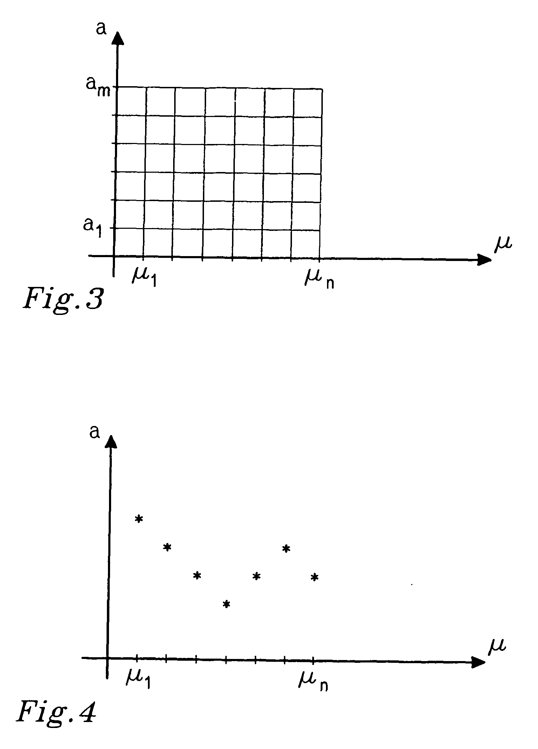

This implementation of the method of finding the appropriate values of the parameter pair $(\mu, a)$ may be referred to as a grid-approach and is illustrated in Fig. 3.

As such, for each one of the nodes in the grid generated by the individual values of the first and second parameter, respectively, the corresponding value of the quality measure QM may be determined and the combination of the first and second parameter $(\mu_i, a_j)$ resulting in the most preferred, which generally is the lowest, value of the quality measure is selected to constitute the preferred parameter pair $(\mu, a)$. It should be noted that although the first implementation of determining the preferred parameter pair $(\mu, a)$ is described hereinabove in terms of firstly selecting a set of individual values $\{\mu_i\}_{i=1,n}$ of the first parameter $\mu$ and secondly selecting a second set of individual values $\left\{a_j^i\right\}_{j=1,n}$ of the second parameter a and then determining the value of the quality measure QM for at least two of the corresponding values of the second parameter a, this order may of course be changed such that the first implementation instead comprises a step of firstly selecting a set of individual values of the second parameter a and secondly selecting a corresponding set for the first parameter $\mu$ and determining the value of the quality measure QM for at least two of the corresponding values of the first parameter $\mu$. Moreover, a further variant of the first implementation may comprise the steps of firstly selecting the sets of the first and second parameters $\mu, a$ and then determining the value of the quality measure QM for a plurality, preferably all, of the combinations of the sets of the first and second parameters wherein the order of combining the sets may be selected according to a predetermined scheme or may even be selected randomly.

The second implementation utilizes the insight that the fictive relation E, c.f. Eq. 4, is in fact linearly proportional to the second parameter a. In other words, in Eq. 4, the aligning moment $M_z$ is an affine function of the second parameter a. This means that, for a given value of the first parameter $\mu_i$, finding a value of the second parameter which results in a local minimum for the quality measure QM may be performed by utilizing traditional linear minimization techniques. As such, for each one of the set of individual values $\{\mu_i\}_{i=1,n}$ of the first parameter $\mu$, a corresponding value of the first parameter a is determined which locally minimizes the quality measure QM. Thus, for each one of the set of individual values $\{\mu_i\}_{i=1,n}$ of the first parameter $\mu$, a value of the second parameter $a_i$, as well as the corresponding local value of the quality measure $QM_i$ is determined. Then, the values of all the local quality measures $QM_i$ are compared to one another and the lowest local quality measure $QM_i$ is selected to be the preferred one. The corresponding values of the first and second parameters $\mu_i$, $a_i$ are thus selected to constitute the preferred parameter pair $(\mu,a)$. The second implementation is illustrated in fig. 4, wherein corresponding value of the second parameter a is indicated for each one of the set of individual values $\{\mu_i\}_{i=1,n}$ of the first parameter $\mu$.

An embodiment of the determination method of the present invention, which embodiment is useful when studying a pure longitudinal case, i.e. a case with pure longitudinal acceleration or retardation, will be presented hereinbelow. In contrast to the lateral case,
wherein the aligning torque of a wheel is used for deriving a quality measure which is to be minimized, the longitudinal case uses the longitudinal slip as a starting point, which longitudinal slip is defines as:

$$\sigma_x = \frac{v_x - R_e\omega}{R_e\omega} \qquad\qquad\qquad \text{Eq. 10}$$

Now, combining Eq. 2 and Eq. 10, the following relation for the longitudinal velocity $v_x$ of a wheel may be formulated:

$$v_x = -\frac{3\mu}{C_{0x}}\left(1-\left(1-\frac{|f_x|}{\mu}\right)^{\frac{1}{3}}\right)sign(f_x)R_e\omega + R_e\omega = \Psi^{-1}(f_x, C_{0x}, \mu)R_e\omega + R_e\omega. \qquad \text{Eq. 11}$$

Now, the present embodiment of the invention utilizes the following two assumptions:

   a) for at least two wheels 12, 18 of a vehicle 10, the friction $\mu$ between the tires and the road is the same, and
   b) a relationship between the longitudinal velocities $V_{x1}$, $V_{x2}$ of the first and a second wheel 12, 18 may be established.

As for assumption a) hereinabove, a person skilled in the art may realize that this assumption may be most preferred when studying two wheels 12, 18 which are located on the same side of a vehicle 10 since it is likely that these to wheels will experience approximately the same wheel-to-road contact. However, there may of course be situations, e.g. when the vehicle 10 is travelling on a substantially homogenous road, wherein assumption a) may be appropriate for any two wheels of a vehicle 10.

As regards assumption b), depending on *inter alia* the stiffnesses in the wheel suspension of the two wheels 12, 18 as well as the stiffness of rest of the chassis of the vehicle 10, a relation between the longitudinal velocity $v_{x1}$ of the first wheel 12 and the longitudinal velocity $v_{x2}$ of the second wheel 18 may be established. An example of such a relation may be:

$$v_{x1} = v_{x2} + K_1\dot{F}_{x1} - K_2\dot{F}_{x2} \qquad\qquad\qquad \text{Eq. 12}$$

wherein the constants $K_1$, $K_2$ of Eq. 12 may be dependent on *inter alia* the aforementioned stiffnesses as well as the longitudinal loads $F_{x1}$, $F_{x2}$ acting on the first and second wheels 12, 18, respectively. However, in its simplest form, the above-mentioned relation is formulated such that the longitudinal velocity $v_{x1}$ of the first wheel 12 is assumed to equal the longitudinal velocity $v_{x2}$ of the second wheel 18, i.e. the stiffnesses of the members connecting the first and second wheels 12, 18 are assumed to be infinitely high. In other words, the constants $K_1$ and $K_2$ of Eq. 12 are in this case assumed to be zero.

Using this latter simplified assumption in combination with the teachings of Eq. 11, the following relation may be generated:

$$R_{e2}\omega_2 - R_{e1}\omega_1 = R_{e1}\omega_1 \Psi^{-1}(f_{x1}, C_{0x1}, \mu) - R_{e2}\omega_2 \Psi^{-1}(f_{x2}, C_{0x2}, \mu).$$ 

<div align="right">Eq. 13</div>

By introducing the following general function:

$$g(x, y) = -3y \left[ 1 - \left( 1 - \frac{|x|}{y} \right)^{\frac{1}{3}} \right] sign(x) \, ,$$

<div align="right">Eq. 14</div>

Eq. 13 may be reformulated to:

$$R_{e2}\omega_2 - R_{e1}\omega_1 = \frac{1}{C_{0x1}} R_{e1}\omega_1 \cdot g(f_{x1}, \mu) - \frac{1}{C_{0x2}} R_{e2}\omega_2 \cdot g(f_{x2}, \mu) \, .$$

<div align="right">Eq. 15</div>

As may be gleaned from Eq. 15, the left hand side LHS of the equation contains data which may be determined by direct or indirect measurements, namely data as regards the rolling radius $R_e$ and the rotational velocity $\omega$ of each wheel 12, 18 and these data are also present in the right hand side RHS. Moreover, the right hand side RHS of Eq. 15 contains data as regards the normalized longitudinal forces $f_{x1}$, $f_{x2}$ of each wheel which forces may be estimated by a simple dynamic load transfer method which will be presented in detail hereinbelow.

The parameters $(C_{0x1}, C_{0x2}, \mu)$ are unknown in Eq. 15. However, it should be realized that when the correct values of $(C_{0x1}, C_{0x2}, \mu)$ have been determined, Eq. 15 is fulfilled such that RHS=LHS. As such, with reference to the parameter determination method of the present invention, the relation according to Eq. 15 may be regarded as constituting the fictive relation E. Thus, in this respect, Eq. 15 may be regarded as an alternative to Eq. 4 to constitute the fictive relation E. Accordingly, the parameters thus needed to be determined in the parameter determination method of the present invention are the rolling radius $R_e$; the rotational velocity $\omega$ and normalized longitudinal force $f_x$ of each one of the first 12 and second 18 wheels, respectively.

As regards the normalized longitudinal forces, it should be noted that the normalized longitudinal force $f_x$ of one wheel may be estimated by the expression:

$$f_{xi} = \frac{m \cdot a_x \cdot \gamma_i}{m \cdot g \cdot (\alpha + \beta \cdot a_x)} \, ,$$

<div align="right">Eq. 16</div>

wherein $\alpha$ and $\beta$ are vehicle constants describing a centre of gravity of the vehicle 10 and $\gamma_i$ is a distribution of the driving or braking force between a front and rear axle of the vehicle 10. The equation presented in Eq. 16 may be referred to as a longitudinal force relation $RF_x$. The distribution of the driving or braking is normalized, such that:

$$\sum_i \gamma_i \equiv 1 \, .$$

<div align="right">Eq. 17</div>

For instance, the distribution $\gamma_i$ may correspond to a normalized pressure of the braking system for each wheel of the vehicle.

Now, returning to the fictive relation E as stipulated in Eq. 15 for the longitudinal case, the unknown parameters of the fictive relation E, namely the friction $\mu$ and the tire stiffnesses $C_{0x1}$, $C_{0x2}$ of the first and second wheel, respectively, may be estimated by a method similar to the one presented for the lateral case. As such, a quality measure QM indicative of how well the fictive relation E according to Eq. 15 is fulfilled is firstly established. Examples of appropriate quality measures QM for Eq. 15 are presented hereinbelow:

$$QM = \left( R_{e2}\omega_2 - R_{e1}\omega_1 - \frac{1}{C_{0x1}} R_{e1}\omega_1 \cdot g(f_{x1},\mu) + \frac{1}{C_{0x2}} R_{e2}\omega_2 \cdot g(f_{x2},\mu) \right)^2 , \text{ or} \qquad \text{Eq. 18}$$

$$QM = \left| R_{e2}\omega_2 - R_{e1}\omega_1 - \frac{1}{C_{0x1}} R_{e1}\omega_1 \cdot g(f_{x1},\mu) + \frac{1}{C_{0x2}} R_{e2}\omega_2 \cdot g(f_{x2},\mu) \right| . \qquad \text{Eq. 19}$$

In analogy with the embodiment of the method of the present invention relating to the lateral case, if a quality measure QM is formulated according to either one of Eq. 18 or Eq. 19 hereinabove, the problem of finding a parameter set $(\mu, C_{ox1}, C_{ox2})$ resulting in a preferred value of the quality measure QM may be regarded as an optimization problem or, even more specifically, a minimization problem, viz

$$\min_{\mu, C_{0x1}, C_{ax2}} QM . \qquad \text{Eq. 20}$$

Again, as for the lateral case, the minimization problem formulated in Eq. 20 may be solved by either one of the two implementations as presented in conjunction with the lateral case, namely a grid approach - which grid approach in the longitudinal case results in that a three-dimensional grid be generated - or an approach comprising a step of firstly selecting a set of individual values $\{\mu_i\}_{i=1,n}$ of the first parameter and for at least two of the individual values in the aforesaid set obtaining a value for each one of the tire stiffnesses $C_{ox1}$, $C_{ox2}$ which result in a local minimum for the quality measure QM. Obtaining the values of the first and second tire stiffness $C_{ox1}$, $C_{ox2}$ may be performed by utilizing traditional linear minimization techniques. To this end, it should be noted that the fictive relation E in the longitudinal case as stipulated in Eq. 15 is linearly proportional to the inverse of the tire stiffnesses $C_{ox1}$, $C_{ox2}$. Thus, as compared to the lateral case, the second implementation for determining an appropriate parameter set $(\mu, C_{ox1}, C_{ox2})$ is basically the same as in the lateral case, be it that the minimization step for finding the local minimum $QM_i$ of the quality measure QM involves a two-dimensional minimization step, namely as regards the two parameters $(1/C_{ox1}, 1/C_{ox2})$.

However, linear optimization techniques are basically identical when comparing a one-dimensional and a two-dimensional minimization problem, hence the steps of a method for finding the values of the parameters $C_{ox1}$, $C_{ox2}$ for an individual value $\mu_i$ are not further elaborated here.

It should however be noted that one implementation of the embodiment described hereinabove may also use the assumption that the tire stiffness $C_{ox1}$ of the first wheel equals the tire stiffness $C_{ox2}$ of the second wheel such that the set of second parameters only includes one parameter $C_{ox} = C_{ox1} = C_{ox2}$.

With reference to Eq. 15, it should be noted that the relation defined therein in may be elaborated further in order to capture possible changes in the rolling radius $R_e$ of at least one of the first and second wheels whilst driving. In the explanation hereinbelow as regards how such changes may be accounted for, the rolling radius $R_{e1}$ of the first wheel is used as an example. However, it should be noted that the approach described below is equally applicable for the rolling radius $R_{e2}$ of the second wheel. Moreover, implementations of the approach may be used for rolling radii $R_{e1}$, $R_{e2}$ of both the first and second wheels.

When including a possible change in rolling radius $R_{e1}$ of the first wheel in the fictive relation E as defined in Eq. 15, the rolling radius $R_{e1}$ of the first wheel may be formulated as:

$$R_{e1} = R_{e1}^0 + \Delta R_{e1} ,$$

wherein $R_{e1}^0$ denotes the initial rolling radius $R_{e1}$ of the first wheel and $\Delta R_{e1}$ represents the change in the rolling radius $R_{e1}$ of the first wheel. Changes in the rolling radius $R_{e1}$ may for instance occur due to changes in the wheel pressure and/or due to wearing of the tire of the wheel. As may be realized by a person skilled in the art, if the expression

$R_{e1} = R_{e1}^0 + \Delta R_{e1}$ is inserted in Eq. 15, the fictive relation E as defined therein is actually linearly proportional to the change $\Delta R_{e1}$ in the rolling radius $R_{e1}$ of the first wheel. As such, the set of second parameters may in this case be constituted by the first and second tire stiffness $C_{ox1}$, $C_{ox2}$ as well as the change $\Delta R_{e1}$ in the rolling radius $R_{e1}$ of the first wheel.

Moreover, in analogy with the lateral wheel load case, the fictive relation E as stipulated by Eq. 15 may be expanded so as to include wheel load conditions for a plurality of time instants $[t_0 \dots t_n]$.

As may be realized from the description hereinabove, the value of the first parameter relating to the tire-to-road contact - which first parameter preferably is the friction $\mu$ - may be determined by a determination method which method is used in either a lateral case or a longitudinal case. However, the inventors of the present invention have also realized that either one of the aforesaid cases may be generalized to an oblique load case, i.e. a case wherein the wheel is subjected to lateral as well as longitudinal loads.

As regards the determination method based on the lateral case as described hereinabove with reference to Eq. 3 to Eq. 9, the inventors of the present invention have realized that the relation presented in Eq. 3 may be generalized so as to also include a term relating to the load in the longitudinal direction. As an example, such a load scenario may emanate from a driving situation wherein the vehicle 10 - onto which the wheel is mounted - is subjected to an acceleration or a retardation at the same time as the vehicle 10 is turning. Without going into details, the relation relating to the aligning moment $M_z$ may be formulated as follows for the load case presented above:

$$M_z = -\mu a \frac{f_y}{|f|} \left( \psi \left( 1 - \frac{|f|}{\mu} \right) + \frac{\delta_e}{a} \frac{|f|}{\mu} \right).$$

Eq. 21

wherein

$$\psi = \left( 1 - \frac{|f|}{\mu} \right)^{1/3}, \text{ and } |f| = \sqrt{f_x^2 + f_y^2}.$$

As may be appreciated by a person skilled in the art, compared to the aligning moment in the lateral case as modelled in Eq. 4, the relation as stipulated in Eq. 21 also includes a parameter relating to the longitudinal load $f_x$ an estimation of which has already been presented, c.f. Eq. 16. Furthermore, as may be gleaned from Eq. 21, the relation modelling the aligning moment is an affine function of half the tire effective length a. As such, appropriate values of the friction $\mu$ as well as half the tire effective length a may be determined using any one of the determination methods, i.e. the first or second implementation, discussed hereinabove in conjunction with the lateral case.

As regards a determination method based on the longitudinal case as previously discussed, the inventors of the present invention have realized that the longitudinal slip of a wheel, c.f. Eq. 2, may be reformulated so as to also include a term relating to the lateral force $f_y$ acting on the wheel, such that:

$$\sigma_x = -3 \frac{\mu}{C} \cdot \frac{f_x}{|f|} (1 - \psi)$$

Eq. 22

wherein C in Eq. 22 is a parameter relating to the stiffness in the longitudinal $C_{0x}$ as well as the lateral $C_{0y}$ direction of the tire. In this respect, one preferred approximation which may be introduced when formulating the relation as laid out in Eq. 22 is that the longitudinal tire stiffness equals the lateral tire stiffness.

Utilizing the relation as disclosed in Eq. 22, the determination method as previously proposed as regards the longitudinal case, c.f. Eq 10 to Eq. 20, may be modified by replacing the Eq. 2 relation for the longitudinal slip $\sigma_x$ with the expression as stipulated in Eq. 22. Without going into details, this will result in a fictive relation E wherein the friction $\mu$ and the combined stiffnesses of a first and a second wheel $C_1$, $C_2$ are unknown parameters. Furthermore, the aforesaid fictive relation will be linearly proportional to an inverse of each one of the first and second combined tire stiffnesses $C_1$, $C_2$. As such, at least the first parameter - i.e. the friction $\mu$ - may in this case be determined by a parameter determination method similar to any one of the methods discussed hereinabove with reference to the longitudinal case. As been previously discussed in relation with the longitudinal case, an implementation of the method presented hereinabove may use the assumption that the combined tire stiffness $C_1$ of the first wheel equals the combined stiffness $C_2$ of the second wheel.

As may be realized from the description of the preferred embodiments hereinabove, the present invention provides for a method of determining at least a first parameter $\mu$ relating to a wheel-to-road contact for a plurality of load cases for one or several wheels. Further modifications of the invention within the scope of the appended claims are feasible. For example, the step of determining an appropriate value of the second parameter for a selected value of the first parameter may include other optimization techniques than the ones presented hereinabove. Purely by way of example, such optimization techniques may comprise a Fibonacci search algorithm or a Newton-Rapson search algorithm.

Furthermore, a preferred determination method according to the present invention may comprise a step of firstly determining the actual wheel load condition, e.g. if the wheel load is longitudinal, lateral or a combination thereof, and then selecting a specific first parameter implementation, which implementation may preferably be selected from any one of the four embodiments presented hereinabove. As such, it will be realized that the present invention is not limited to the embodiments described above and illustrated in the drawings; rather a person skilled in the art will recognise many alterations and modifications that can be performed within the frame of the scope of protection of the appended claims.

**Claims**

1. A method for determining at least a wheel-to-road friction coefficient ($\mu$) for communication to a driver and/or a driver assistance system of a vehicle, wherein said wheel has a longitudinal (x) and a lateral (y) extension and wherein said method comprises a step of:

   - determining a plurality of wheel parameters relating to the load on the wheel and/or relating to the motion of the wheel,
   - establishing a fictive relation (E) comprising: at least one of said plurality of wheel parameters, said friction coefficient ($\mu$) and a set of second parameters (a, $C_{ox1}$, $C_{ox2}$) relating to said wheel-to-road contact, wherein said relation (E), at least during a longitudinal wheel load case or a lateral wheel load case, is linearly proportional to each one of said parameters (a, $C_{ox1}$, $C_{ox2}$) in said set of second parameters or an inversion thereof;
   - establishing a quality measure (QM) indicative of how well said fictive relation (E) is fulfilled;

   **characterized in that**:

   said method further comprises the steps of:

   - selecting a set of individual values $\{\mu_i\}_{i=1,n}$ of said friction coefficient ($\mu$);
   - for at least two of said individual values in said set:

     ○ determining the value for each one of said parameters ($a^i$, $C^i_{ox1}$, $C^i_{ox2}$) in said set of second parameters which results in a preferred quality measure ($QM^i$) for said individual value ($\mu_i$) of said -friction coefficient ($\mu$);

   - selecting the value of said -friction coefficient ($\mu$) as the individual value ($\mu_i$) from said at least two individual values which corresponding preferred quality measure ($OM^i$) is indicative of that said fictive relation (E) is best fulfilled.

2. The method according to claim 1, wherein said quality measure (QM) is an error function for said fictive relation (E) such that a value of zero of said quality measure (QM) is indicative of that said fictive relation (E) is fulfilled.

3. The method according to claim 2, wherein said step of determining the value of each one of said parameters ($a^i$, $C^i_{ox1}$, $C^i_{ox2}$) in said set of second parameters comprises a step of minimizing said quality measure (QM).

4. The method according to claim 3, wherein said step of minimizing said quality measure (QM) is performed by utilizing a linear optimization technique.

5. The method according to any one of claims 1 - 3, wherein said step of determining said value of each one of said

parameters ($a^i$, $C^i_{ox1}$, $C^i_{ox2}$) in said set of second parameters comprises the steps of:

- selecting a second set of individual values for each one of said parameters ($a^i$, $C^i_{ox1}$, $C^i_{ox2}$) in said set of second parameters; $(\{a^i_j\}_{j=1,n};\{C'_{ox1,j}\}_{j=1,n};\{C'_{ox2,j}\}_{j=1,n})$;

- for at least two of said individual values in said second set:

  o selecting the value of each one of said parameters in said set of second parameters ($a^i$, $C^i_{ox1}$, $C^i_{ox2}$) as the individual value ($\{a^i_j\}_{j=1,n};\{C'^i_{ox1,j}\}_{j=1,n};\{C'^i_{ox2,j}\}_{j=1,n}$) which results in said preferred quality measure ($QM^i$).

6. The method according to any one of the preceding claims, wherein said method is performed for a wheel load case comprising a lateral load ($F_y$), wherein said wheel parameters comprise a subset which in turn comprises: an aligning torque ($M_z$), a vertical force ($F_z$) and said lateral force ($F_y$) of said wheel, wherein said fictive relation (E) comprises said subset.

7. The method according to claim 6, wherein said fictive relation (E) further comprises the following parameters: said wheel-to-road friction ($\mu$) a length parameter (a) relating to an effective length of a contact patch between said wheel and said road and a caster offset ($\delta_c$) of said wheel, wherein said length parameter (a) is comprised in said set of second parameters.

8. The method according to claim 6 or 7, wherein said wheel is mounted on a vehicle (10) and said lateral force ($F_y$) is determined by a lateral force relation ($RF_y$) comprising the following parameters: a vehicle mass (m), a vehicle longitudinal acceleration ($a_x$), a vehicle lateral acceleration ($a_y$) and a vehicle yaw acceleration ($\ddot{\psi}$).

9. The method according to any one of claims 6 to 8, wherein said load case also comprises a longitudinal load ($F_x$) and said fictive relation (E) further comprises a wheel parameter representing said longitudinal load ($F_x$).

10. The method according to any one of claims 1 to 5, wherein said method is performed for a vehicle (10) comprising a first and a second wheel (12, 18) during a load case comprising a longitudinal load ($F_x$), wherein said first wheel (12) has a first longitudinal velocity ($v_{x1}$) and said second wheel (18) has a second longitudinal velocity ($v_{x2}$), said method comprising a step of establishing a relation between said first and second longitudinal velocities ($v_{x1}$, $v_{x2}$), wherein said fictive relation (E) comprises the following parameters: a longitudinal load ($F_{x1}$) of said first wheel (12) and a longitudinal load ($F_{x2}$) of said second wheel (18).

11. The method according to claim 10, wherein said fictive relation (E) further comprises the following parameters: a first longitudinal tire stiffness ($C_{x1}$) of said first wheel (12); a second longitudinal tire stiffness ($C_{x2}$) of said second wheel (18), and said wheel-to-road friction ($\mu$), which wheel-to-road friction ($\mu$) is assumed to be equal for said first and second wheels (12, 18), wherein said first and second longitudinal tire stiffnesses ($C_{x1}$, $C_{x2}$) are comprised in said set of second parameters.

12. The method according to claim 10, wherein said load case also comprises a lateral load $F_y$ and said fictive relation (E) further comprises: a wheel parameter representing said lateral load ($F_y$), a first combined tire stiffness ($C_1$) of said first wheel (12) and a second combined tire stiffness ($C_2$) of said second wheel (18), wherein said first and second combined tire stiffnesses ($C_1$ $C_2$) are comprised in said set of second parameters.

13. The method according to claim 11 or 12, wherein said fictive relation (E) further comprises the following parameters: an effective rolling radius ($R_{e1}$) of said first wheel (12); an effective rolling radius ($R_{e2}$) of said second wheel, a rotational velocity ($\omega_1$) of said first wheel and a rotational velocity ($\omega_2$) of said second wheel (18).

14. The method according to any one of claims 9 to 13, wherein said wheel is mounted on a vehicle and said longitudinal force ($F_x$) is determined by a longitudinal force relation ($RF_x$) comprising the following parameters: a vehicle mass (m), a vehicle longitudinal acceleration ($a_x$) and a parameter ($\gamma$) representative of a driving or braking force between said wheels (12, 18) of said vehicle (10).

**15.** The method according to any one of the preceding claims, wherein said fictive relation (E) in turn comprises a plurality of fictive sub-relations ($E_i$), wherein each one of said sub-relations ($E_i$) comprises at least one of said plurality of wheel parameters, said friction coefficient ($\mu$) and a set of second parameters (a, $C_{ox1}$, $C_{ox2}$) relating to said wheel-to-road contact, each one of said sub-relations ($E_i$) representing a wheel load case at an individual time instant ($t_i$).

**16.** Computer program product, **characterized in that** it comprises a computer program containing computer program code executable in a computer or a processor to implement all the steps of a method according to any one of claims 1-15, said product being stored on a computer-readable medium or a carrier wave.

**17.** Electronic control unit (ECU), **characterized in that** it comprises a computer program product according to claim 16 and arranged to execute a friction coefficient determination method according to any one of claims 1-15.

**18.** A vehicle, **characterized in that** it comprises an electronic control unit (ECU) according to claim 17.

**Patentansprüche**

**1.** Ein Verfahren zum Bestimmen mindestens eines Reibkoeffizienten ($\mu$) zwischen Rad und Straße zur Übermittlung an einen Fahrer und / oder an ein Fahrer-Assistenz-System eines Fahrzeuges, wobei das Rad eine Ausdehnung (x) in Längsrichtung und eine Ausdehnung (y) in Querrichtung hat und in welchem das Verfahren folgende Schritte umfasst:

- Bestimmen einer Mehrzahl von Radparametern, die sich auf die Belastung des Rades und / oder auf die Bewegung des Rades beziehen,
- Aufstellen einer fiktiven Relation (E), umfassend: wenigstens einen aus der Mehrzahl von Radparametern, wobei sich der Reibungskoeffizient ($\mu$) und ein Satz von zweiten Parametern (a, $C_{OX1}$, $C_{OX2}$) auf den Kontakt zwischen Rad und Straße beziehen, wobei die Relation (E) zumindest während eines Falles einer längsgerichteten Rad-Belastung oder während des Falles einer seitlich ausgerichteten Rad-Belastung linear proportional zu jedem der Parameter (a, $C_{OX1}$, $C_{OX2}$) in dem Satz der zweiten Parameter oder einer Umkehrung davon ist;
- Aufstellen eines Qualitätsmaßes (QM), welches anzeigt, wie gut die fiktive Relation (E) erfüllt wird,

**dadurch gekennzeichnet, dass** das Verfahren des weiteren folgende Schritte umfasst:

- Auswählen eines Satzes von einzelnen Werten $\{\mu\}_{i=1,n}$ des Reibkoeffizienten ($\mu$);
- für mindestens zwei der einzelnen Werte in dem Satz:

  □ Festlegen des Wertes für jeden der Parameter ($a^i$, $C^i_{OX1}$, $C^i_{OX2}$) in dem Satz der zweiten Parameter, was zu einem bevorzugten Qualitätsmaß ($QM^i$) für den einzelnen Wert ($\mu_i$) des Reibkoeffizienten ($\mu$) führt;

- Auswählen eines Wertes des Reibungskoeffizienten ($\mu$) als den einzelnen Wert ($\mu_i$) aus den mindestens zwei einzelnen Werten, dessen zugeordnetes bevorzugtes Qualitätsmaß $QM^i$ anzeigt, dass die fiktive Relation (E) am besten erfüllt wird.

**2.** Verfahren nach Anspruch 1, worin das Qualitätsmaß (QM) eine Fehlerfunktion für die fiktive Relation (E) ist, so dass ein Wert von Null des Qualitätsmaßes (QM) dafür steht, dass die fiktive Relation (E) erfüllt ist.

**3.** Verfahren nach Anspruch 2, worin der Schritt des Bestimmens des Wertes für jeden einzelnen der Parameter ($a^i$, $C^i_{OX1}$, $C^i_{OX2}$) in dem Satz der zweiten Parameter einen Schritt des Minimierens des Qualitätsmaßes (QM) umfasst.

**4.** Verfahren nach Anspruch 3, worin der Schritt des Minimierens des Qualitätsmaßes (QM) durch Anwenden einer linearen Optimierungstechnik durchgeführt wird.

**5.** Verfahren nach einem der Ansprüche 1 bis 3, worin der Schritt des Bestimmens des Wertes für jeden einzelnen der Parameter ($a^i$, $C^i_{OX1}$, $C^{i-}_{OX2}$) in dem Satz der zweiten Parameter folgende Schritte umfasst:

- Auswählen eines zweiten Satzes von einzelnen Werten für jeden der Parameter ($a^i$, $C^i_{OX1}$, $C^i_{OX2}$) in dem Satz der zweiten Parameter ($\{\alpha^i_j\}_{j=1}$, $\{C^i_{OX1j}\}_{j=1, n}$; $\{C^i_{OX2j}\}_{j=1, n}$);

- für mindestens zwei der einzelnen Werte in dem zweiten Satz:

□ Auswählen des Wertes von jedem einzelnen der Parameter in dem Satz der zweiten Parameter ($a^i$, $C^i_{OX1}$, $C^i_{OX2}$) als den einzelnen Wert ($\{a^i_j\}_{j=1,n}$; $\{C^i_{OX1i,j}\}_{j=1,n}$; $\{C^i_{OX2,j}\}_{j=1,n}$), der das bevorzugte Qualitätsmaß (QM) ergibt.

6. Verfahren nach einem der vorhergehenden Ansprüche, worin das Verfahren für einen Fall einer Radlast durchgeführt wird, der eine seitliche Last ($F_y$) umfasst, wobei die Parameter für das Rad einen Unter-Satz umfassen, der wiederum umfasst: ein Ausricht-Drehmoment ($M_z$), eine vertikale Kraft ($F_z$) und die seitliche Kraft ($F_y$) des Rades, wobei die fiktive Relation (E) den Unter-Satz beinhaltet.

7. Verfahren nach Anspruch 6, worin die fiktive Relation (E) weiterhin folgende Parameter beinhaltet: die Reibung ($\mu$) zwischen Rad und Straße, einen Längenparameter (a), der sich auf eine wirksame Länge einer Kontaktfläche zwischen dem Rad und der Straße bezieht, und einen Nachlaufversatz ($\delta_c$) des Rades, wobei der Längenparameter (a) in dem Satz von zweiten Parametern enthalten ist.

8. Verfahren nach Anspruch 6 oder 7, worin das Rad an einem Fahrzeug (10) befestigt ist und die seitliche Kraft ($F_y$) durch eine Relation ($RF_y$) bestimmt wird, die folgende Parameter umfasst: Eine Masse (m) des Fahrzeugs, eine Beschleunigung ($a_x$) des Fahrzeuges in Längsrichtung, eine Querbeschleunigung ($a_y$) des Fahrzeugs und eine Gierbeschleunigung ($\psi''$) des Fahrzeugs.

9. Verfahren nach einem der Ansprüche 6 bis 8, worin der Lastfall auch eine Last ($F_x$) in Längsrichtung umfasst und die fiktive Relation (E) auch einen Radparameter einschließt, der die Last ($F_x$) in Längsrichtung verkörpert.

10. Verfahren nach einem der Ansprüche 1 bis 5, worin das Verfahren für ein Fahrzeug (10) durchgeführt wird, das ein erstes und ein zweites Rad (12, 18) während eines Lastfalles umfasst, der eine Kraft ($F_x$) in Längsrichtung beinhaltet, wobei das erste Rad (12) eine erste Geschwindigkeit ($v_{x1}$) in Längsrichtung und das zweite Rad (18) eine zweite Geschwindigkeit ($v_{x2}$) in Längsrichtung aufweist, wobei das Verfahren einen Schritt umfasst, eine Beziehung zwischen den ersten und zweiten Geschwindigkeiten ($v_{x1}$, $v_{x2}$) in Längsrichtung aufzustellen und wobei die fiktive Relation (E) folgende Parameter einschließt: eine Last ($F_{x1}$) in Längsrichtung des ersten Rades (12) und eine Last ($F_{x2}$) in Längsrichtung des zweiten Rades (18).

11. Verfahren nach Anspruch 10, worin die fiktive Relation (E) weiter folgende Parameter einschließt: eine erste Steifigkeit ($C_{x1}$) in Längsrichtung des Reifens des ersten Rades (12), eine zweite Steifigkeit ($C_{x2}$) in Längsrichtung des Reifens des zweiten Rades (18) und den Reibkoeffizienten ($\mu$) zwischen Rad und Straße, wobei angenommen wird, dass der Reibkoeffizient ($\mu$) zwischen Rad und Straße für die ersten und zweiten Räder (12,18) gleich ist und wobei die ersten und zweiten Steifigkeiten ($C_{x1}$, $C_{x2}$) in Längsrichtung der Reifen in dem Satz von zweiten Parametern enthalten sind.

12. Verfahren nach Anspruch 10, worin der Lastfall auch eine Last ($F_y$) in seitlicher Richtung umfasst und die fiktive Relation (E) weiter umfasst: einen Radparameter, der die Last ($F_y$) in seitlicher Richtung verkörpert, eine erste kombinierte Steifigkeit ($C_1$) des Reifens des ersten Rades (12) und eine zweite kombinierte Steifigkeit ($C_2$) des Reifens des zweiten Rades (18), wobei die ersten und zweiten kombinierten Steifigkeiten ($C_1$, $C_2$) der Reifen in dem Satz von zweiten Parametern enthalten sind.

13. Verfahren nach Anspruch 11 oder 12, worin die fiktive Relation (E) weiter folgende Parameter umfasst, einen wirksamen Abrollradius ($R_{e1}$) des ersten Rades (12), einen wirksamen Abrollradius ($R_{e2}$) des zweiten Rades (18), eine Winkelgeschwindigkeit ($\omega_1$) des ersten Rades und eine Winkelgeschwindigkeit ($\omega_2$) des zweiten Rades.

14. Verfahren nach einem der Ansprüche 9 bis 13, worin das Rad an einem Fahrzeug montiert ist und die Kraft ($F_x$) in Längsrichtung durch eine Längskraft-Relation ($RF_x$) bestimmt wird, die folgende Parameter beinhaltet: eine Fahrzeugmasse (m), eine Fahrzeugbeschleunigung ($a_x$) in Längsrichtung und einen Parameter ($\gamma$), der eine Antriebs- oder Bremskraft zwischen den Rädern (12,18) des Fahrzeugs (10) verkörpert.

15. Verfahren nach einem der vorhergehenden Ansprüche, worin die fiktive Relation (E) wiederum eine Mehrzahl von fiktiven Unter-Relationen ($E_i$) umfasst, wobei jede einzelne der Unter-Relationen ($E_i$) wenigstens einen aus der Mehrzahl von Rad-Parametern, den Reibkoeffizienten ($\mu$) und einen Satz von zweiten Parametern (a, $C_{ox1}$, $C_{ox2}$), die sich auf den Kontakt zwischen Rad und Straße beziehen, beinhaltet, wobei jede der Unter-Relationen ($E_i$) einen

Lastfall zu einem bestimmten Zeitpunkt ($t_i$) verkörpert.

**16.** Computerprogrammprodukt, **dadurch gekennzeichnet, dass** es ein Computerprogramm umfasst, das einen Computer-Programmcode beinhaltet, der auf einem Computer oder Prozessor ausführbar ist, um alle Schritte eines Verfahrens nach einem der Ansprüche 1 bis 15 zu verwirklichen, wobei das Produkt in einem durch Computer lesbaren Medium oder einer Trägerwelle gespeichert ist.

**17.** Elektronische Steuereinheit (ECU), **dadurch gekennzeichnet, dass** sie ein Computerprogrammprodukt nach Anspruch 16 umfasst, das so ausgelegt ist, ein Verfahren zum Bestimmen eines Reibkoeffizienten gemäß einem der Ansprüche 1 bis 15 auszuführen.

**18.** Fahrzeug, **dadurch gekennzeichnet, dass** es eine Elektronische Steuereinheit (ECU) nach Anspruch 17 umfasst.

**Revendications**

**1.** Procédé de détermination d'au moins un coefficient ($\mu$) de friction roue-route pour sa communication à un conducteur et/ou à un système d'aide au conducteur d'un véhicule, dans lequel ladite roue a une extension longitudinale (x) et une extension latérale (y) et dans lequel ledit procédé comprend une étape de :

- détermination d'une pluralité de paramètres de roue relatifs à la charge sur la roue et/ou relatifs au mouvement de la roue,
- établissement d'une relation fictive (E) comprenant : au moins l'un de ladite pluralité de paramètres de roue, dudit coefficient ($\mu$) de friction et d'un jeu de deuxièmes paramètres ($a$, $C_{ox1}$, $C_{ox2}$) relatifs audit contact roue-route, dans lequel ladite relation (E), au moins lors d'un cas de charge longitudinale de la roue ou d'un cas de charge latérale de la roue, est linéairement proportionnel à chacun desdits paramètres ($a$, $C_{ox1}$, $C_{ox2}$) dans ledit jeu de deuxièmes paramètres ou à une inversion de ceux-ci ;
- établissement d'une mesure de qualité (QM) indicative de la façon dont ladite relation fictive (E) est remplie ;

*caractérisé en ce que* ledit procédé comprend en outre les étapes de :

- choix d'un jeu de valeurs individuelles $\{\mu_i\}_{i=1,n}$ dudit coefficient ($\mu$) de friction ;
- pour au moins deux desdites valeurs individuelles dans ledit jeu :

• détermination de la valeur pour chacun desdits paramètres ($a^i$, $C^i_{ox1}$, $C^i_{ox2}$) dans ledit jeu de deuxièmes paramètres qui a pour résultat une mesure de qualité préférée ($OM^i$) pour ladite valeur ($\mu_i$) dudit coefficient de friction ($\mu$) ;

- sélection de la valeur dudit coefficient ($\mu$) de friction comme la valeur individuelle ($\mu_i$) parmi lesdites au moins deux valeurs dont la mesure de qualité préférée correspondante ($QM^i$) est indicative que ladite relation fictive (E) est mieux remplie.

**2.** Procédé selon la revendication 1, dans lequel ladite mesure de qualité (QM) est une fonction d'erreur pour ladite relation fictive (E) telle qu'une valeur de zéro de ladite mesure de qualité (QM) soit indicative de ce que ladite relative fictive (E) est remplie.

**3.** Procédé selon la revendication 2, dans lequel ladite étape de détermination de la valeur de chacun desdits paramètres ($a^i$, $C^i_{ox1}$, $C^i_{ox2}$) dans ledit jeu de deuxièmes paramètres comprend une étape de minimisation de ladite mesure de qualité (QM).

**4.** Procédé selon la revendication 3, dans lequel ladite étape de minimisation de ladite mesure de qualité (QM) est effectuée en utilisant une technique d'optimisation linéaire.

**5.** Procédé selon l'une quelconque des revendications 1 à 3, dans lequel ladite étape de détermination de ladite valeur de chacun desdits paramètres ($a^i$, $C^i_{ox1}$, $C^i_{ox2}$) dans ledit jeu de deuxièmes paramètres comprend les étapes de :

- sélection d'un deuxième jeu de valeurs individuelles pour chacun desdits paramètres ($a^i$, $C^i_{ox1}$, $C^i_{ox2}$) dans

ledit jeu de deuxièmes paramètres

$$( \{a_j^i\}_{j=1,n} ; \{C_{ox1,j}^i\}_{j=1,n} ; \{C_{ox2,j}^i\}_{j=1,n} );$$

- pour au moins deux desdites valeurs individuelles dans ledit deuxième jeu :

• sélection de la valeur de chacun desdits paramètres dans ledit jeu de deuxièmes paramètres ($a^i$, $C_{ox1}^i$, $C_{ox2}^i$) comme étant la valeur individuelle

$$( \{a_j^i\}_{j=1,n} ; \{C_{ox1,j}^i\}_{j=1,n} ; \{C_{ox2,j}^i\}_{j=1,n} )$$ qui a pour résultat ladite mesure de qualité préférée ($QM^i$).

6. Procédé selon l'une quelconque des revendications précédentes, dans lequel ledit procédé est mis en oeuvre pour un cas de charge de la roue comprenant une charge latérale ($F_y$), dans lequel lesdits paramètres de roue comprennent un sous-ensemble qui, à son tour, comprend : un moment d'alignement ($M_z$), une force verticale ($F_z$) et ladite force latérale ($F_y$) de ladite roue, dans lequel ladite relation fictive (E) comprend ledit sous-ensemble.

7. Procédé selon la revendication 6, dans lequel ladite relation fictive (E) comprend en outre les paramètres suivants : ladite friction roue-route ($\mu$), un paramètre de longueur (a) relatif à une longueur effective d'une aire de contact entre ladite roue et ladite route, et une projection de la chasse ($\delta_c$) de ladite roue, dans lequel ledit paramètre de longueur (a) est compris dans ledit jeu de deuxièmes paramètres.

8. Procédé selon la revendication 6 ou 7, dans lequel ladite roue est montée sur un véhicule (10) et ladite force latérale ($F_y$) est déterminée par une relation de force latérale ($RF_y$) comprenant les paramètres suivants : une masse (m) du véhicule, une accélération longitudinale ($a_x$) du véhicule, une accélération latérale ($a_y$) du véhicule, et une accélération de lacet du véhicule ($\ddot{\psi}$).

9. Procédé selon l'une quelconque des revendications 6 à 8, dans lequel ledit cas de charge comprend aussi une charge longitudinale ($F_x$) et ladite relation fictive (E) comprend en outre un paramètre de roue représentant ladite charge longitudinale ($F_x$).

10. Procédé selon l'une quelconque des revendications 1 à 5, dans lequel ledit procédé est mis en oeuvre pour un véhicule (10) comprenant une première et une deuxième roues (12, 18) durant un cas de charge comprenant une charge longitudinale ($F_x$), dans lequel ladite première roue (12) a une première vitesse longitudinale ($V_{x1}$) et ladite deuxième roue (18) a une deuxième vitesse longitudinale ($V_{x2}$), ledit procédé comprenant une étape d'établissement d'une relation entre lesdites première et deuxième vitesses longitudinales ($V_{x1}$, $V_{x2}$), dans lequel ladite relation fictive (E) comprend les paramètres suivants : une charge longitudinale ($F_{x1}$) de ladite première roue (12) et une charge longitudinale ($F_{x2}$) de ladite deuxième roue (18).

11. Procédé selon la revendication 10, dans lequel ladite relation fictive (E) comprend en outre les paramètres suivants : une première rigidité longitudinale ($C_{x1}$) du pneumatique de ladite première roue (12) ; une deuxième rigidité longitudinale ($C_{x2}$) du pneumatique de ladite deuxième roue (18), et ladite friction roue-route ($\mu$), laquelle friction roue-route ($\mu$) est supposée être égale pour lesdites première et deuxième roues (12, 18), dans lequel lesdites première et deuxième rigidités longitudinales ($C_{x1}$, $C_{x2}$) du pneumatique sont comprises dans ledit jeu de deuxièmes paramètres.

12. Procédé selon la revendication 10, dans lequel ledit cas de charge comprend une charge latérale ($F_y$) et ladite relation fictive (E) comprend en outre : un paramètre de roue représentant ladite charge latérale ($F_y$), une première rigidité combinée ($C_1$) du pneumatique de ladite première roue (12) et une deuxième rigidité combinée ($C_2$) du pneumatique de ladite deuxième roue (18), dans lequel lesdites première et deuxième rigidités combinées ($C_1$, $C_2$) du pneumatique sont comprises dans ledit jeu de deuxièmes paramètres.

13. Procédé selon la revendication 11 ou 12, dans lequel ladite relation fictive (E) comprend en outre les paramètres suivants : un rayon de roulement effectif ($R_{e1}$) de ladite première roue (12) ; un rayon de roulement effectif ($R_{e2}$) de ladite deuxième roue, une vitesse de rotation ($\omega_1$) de ladite première roue et une vitesse de rotation ($\omega_2$) de ladite deuxième roue (18).

14. Procédé selon l'une quelconque des revendications 9 à 13, dans lequel ladite roue est montée sur un véhicule et

ladite force longitudinale ($F_x$) est déterminée par une relation ($RF_x$) de force longitudinale comprenant les paramètres suivants : une masse (m) du véhicule, une accélération longitudinale ($a_x$) du véhicule et un paramètre ($\gamma$) représentatif d'une force d'entraînement ou de freinage entre lesdites roues (12, 18) dudit véhicule (10).

15. Procédé selon l'une quelconque des revendications précédentes, dans lequel ladite relation fictive (E) comprend, à son tour, une pluralité de sous-relations fictives ($E_i$), dans lequel chacune desdites sous-relations ($E_i$) comprend au moins l'un de ladite pluralité de paramètres de roue, dudit coefficient de friction ($\mu$) et un jeu de deuxièmes paramètres (a, $C_{ox1}$, $C_{ox2}$) relatifs audit contact roue-route, chacune desdites sous-relations ($E_i$) représentant un cas de charge de roue à un instant individuel donné ($t_i$).

16. Produit-programme informatique, *caractérisé en ce qu*'il comprend un programme informatique contenant un code de programme informatique exécutable dans un ordinateur ou un processeur pour mettre en oeuvre toutes les étapes d'un procédé selon l'une quelconque des revendications 1 à 15, ledit produit étant stocké sur un support informatique ou sur une onde porteuse.

17. Unité de commande électronique (ECU), *caractérisée en ce qu*'elle comprend un produit-programme informatique selon la revendication 16 et prévue pour mettre en oeuvre un procédé de détermination d'un coefficient de friction selon l'une quelconque des revendications 1 à 15.

18. Véhicule, *caractérisé en ce qu*'il comprend une unité de commande électronique (ECU) selon la revendication 17.

10

12

14

18

16

x

z

y

Fig.1

X

Y

Z

*Fig.2*

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5513907 A

- US 20010029419 A1